# EUROPEAN PATENT SPECIFICATION

(11) **EP 3 920 606 B1**
(45) Date of publication and mention of the grant of the patent: **28.08.2024**
(21) Application number: 19914147.4
(22) Date of filing: 01.02.2019
(51) Int. Cl.: H04W 52/36, H04W 52/34, H04W 52/40

(54) **USER DEVICE AND BASE STATION DEVICE**
BENUTZERVORRICHTUNG UND BASISSTATIONSVORRICHTUNG
DISPOSITIF D'UTILISATEUR ET DISPOSITIF DE STATION DE BASE

(43) Date of publication of application: 08.12.2021
(73) Proprietor: NTT DOCOMO, INC., Chiyoda-Ku Tokyo 100-6150 (JP)
(72) Inventor: UCHINO, Tooru, Tokyo 100-6150 (JP); TAKAHASHI, Hideaki, Tokyo 100-6150 (JP)
(74) Representative: Hoffmann Eitle
(86) International application number: PCT/JP2019/003747
(87) International publication number: WO 2020/157987

(56) References cited:
- EP-A1- 3 200 502
- WO-A1-2016/047695
- WO-A1-2016/047695
- ZTE ET AL: "PHR report for the UE do not support dynamic power sharing", vol. RAN WG2, no. Sanya, China; 20180416 - 20180420, 14 April 2018 (2018-04-14), XP051428151, Retrieved from the Internet <URL:http://www.3gpp.org/ftp/Meetings%5F3GPP%5FSYNC/RAN2/Docs/> [retrieved on 20180414]
- HUAWEI ET AL: "UL power control for NR-NR dual connectivity", vol. RAN WG1, no. Taipei; 20190121 - 20190125, 20 January 2019 (2019-01-20), XP051592980, Retrieved from the Internet <URL:http://www.3gpp.org/ftp/Meetings%5F3GPP%5FSYNC/RAN1/Docs/R1%2D1900054%2Ezip> [retrieved on 20190120]
- HUAWEI ET AL: "Discussion on power headroom configuration exchange", vol. RAN WG2, no. Spokane, USA; 20181112 - 20181116, 12 November 2018 (2018-11-12), XP051556946, Retrieved from the Internet <URL:http://www.3gpp.org/ftp/Meetings%5F3GPP%5FSYNC/RAN2/Docs/R2%2D1817415%2Ezip> [retrieved on 20181112]
- ZTE, SANECHIPS: "PHR report for the UE do not support dynamic power sharing", 3GPP TSG RAN WG2 #101BIS R2-1804406, 20 April 2018 (2018-04-20), XP051428151, Retrieved from the Internet <URL:http://www.3gpp.org/ftp/tsg_ran/WG2_RL2/TSGR2_101bis/Docs/R2-1804406.zip>
- HUAWEI ET AL.: "UL power control for NR-NR dual connectivity", 3GPP TSG RAN WG1 AD-HOC MEETING 1901 RL-1900054, 25 January 2016 (2016-01-25), XP051592980, Retrieved from the Internet <URL:http://www.3gpp.org/ftp/tsg_ran/WG1_RL1/TSGR1_AH/NR_AH_1901/Docs/Rl-1900054.zip>
- HUAWEI ET AL.: "Discussion on power headroom configuration exchange", 3GPP TSG RAN WG2 #104 R2-1817415, 16 November 2018 (2018-11-16), XP051556946, Retrieved from the Internet <URL:http://www.3gpp.org/ftp/tsg_ran/WG2_RL2/TSGR2_104/Does/R2-1817415.zip>

## Description

### TECHNICAL FIELD

The present invention relates to a user device and a base station device of a radio communication system.

### BACKGROUND ART

In NR (New Radio) (which is also referred to as "5G") that is a successor system to Long Term Evolution (LTE), technology has been studied (e.g., Non-Patent Document 1) that meets requirements, such as a requirement on a large capacity system, a requirement on a high data transmission rate, a requirement on low latency, a requirement on simultaneous connection of multiple terminals, a requirement on low cost, and a requirement on power saving.

In the NR system, a technique called E-UTRA-NR dual connectivity (hereinafter referred to as "EN-DC") or Multi Radio Access Technology (RAT) dual connectivity (hereinafter referred to as "MR-DC") has been introduced (for example, Non-Patent Document 2), which divides data between a base station (eNB) of the LTE system and a base station (gNB) of the NR system and simultaneously transmits and receives data by these base stations, similar to dual connectivity in the LTE system. Furthermore, in the NR system, similar to the LTE system, a power headroom report (PHR) for uplink transmit power control has been introduced (e.g., Non-Patent Document 3).

Non-Patent Document 4 describes PHR reporting for UE when dynamic power sharing is not supported.

Document WO 2016/047695 discloses a PHR comprising bits to determine serving SCells present in the PHR report.

### Related Art Document

### [Non-Patent Document]

Non-Patent Document 1: 3GPP TS 38.300 V15.4.0 (2018-12)
Non-Patent Document 2: 3GPP TS 37.340 V15.4.0 (2018-12)
Non-Patent Document 3: 3GPP TS 38.321 V15.4.0 (2018-12)
Non-Patent Document 4: ZTE ET AL: "PHR report for the UE do not support dynamic power sharing", 3GPP DRAFT; R2-1804406.

### SUMMARY OF THE INVENTION

### [PROBLEM TO BE SOLVED BY THE INVENTION]

For dual connectivity in an NR system, there is a case in which, if there is a band combination that does not support dynamic power sharing, reporting of PHR on the band combination is not correctly executed.

The present invention has been made in view of the above-described point, and an object is to properly implement reporting of the power headroom.

### [MEANS FOR SOLVING THE PROBLEM]

This object is accomplished by the subject-matter of the independent claims. The dependent claims concern particular embodiments.

### [ADVANTAGE OF THE INVENTION]

According to the disclosed technology, reporting of power headroom can be properly implemented.

### BRIEF DESCRIPTION OF DRAWINGS

FIG. 1 is a diagram for illustrating a radio communication system according to an embodiment of the present invention;
FIG. 2 is a diagram for illustrating examples of a PH;
FIG. 3 is a diagram illustrating an example of PHR;
FIG. 4 is a sequence diagram for illustrating an operation example of PHR according to an embodiment of the present invention;
FIG. 5 is a diagram for illustrating an example (1) of PHR according to an embodiment of the present invention;
FIG. 6 is a diagram illustrating an example (2) of PHR according to an embodiment of the present invention;
FIG. 7 is a diagram for illustrating an example (3) of PHR according to an embodiment of the present invention;
FIG. 8 is a diagram for illustrating an example (4) of PHR according to an embodiment of the present invention;
FIG. 9 is a diagram illustrating an example of a functional configuration of a base station device 10 according to an embodiment of the present invention;
FIG. 10 is a diagram illustrating an example of a functional configuration of a user device 20 according to an embodiment of the present invention; and
FIG. 11 is a diagram illustrating an example of a hardware configuration of the base station device 10 or the user device 20 according to an embodiment of the present invention.

### [EMBODIMENTS OF THE INVENTION]

In the following, embodiments of the present invention are described with reference to the drawings. Note that the embodiments described below are examples, and embodiments to which the present invention is applied are not limited to the following embodiments.

For an operation of a radio communication system according to an embodiment of the present invention, existing technology is used as appropriate. Here, the existing technology is, for example, that of an existing LTE. However, the existing technology is not limited to that of the existing LTE. The term "LTE" as used herein is intended to have a broad meaning including LTE-Advanced and a scheme subsequent to LTE-Advanced (e.g., NR), unless as otherwise specified.

In the embodiments of the present invention described below, terms used in the existing LTE are used, such as Synchronization Signal (SS), Primary SS (PSS), Secondary SS (SSS), Physical Broadcast channel (PBCH), and Physical Random Access channel (PRACH). This is for convenience of description, and signals and functions similar to these may be referred to by other names. The above-described terms in NR correspond to NR-SS, NR-PSS, NR-SSS, NR-PBCH, NR-PRACH, and the like. However, even if a signal is used for NR, the signal is not always explicitly indicated as "NR-."

In embodiments of the present invention, a duplex scheme may be a Time Division Duplex (TDD) scheme, a Frequency Division Duplex (FDD) scheme, or any other scheme (e.g., Flexible Duplex).

In embodiments of the present invention, "configuring" a radio parameter, or the like may imply that a predetermined value is preconfigured, or that a radio parameter signaled from a base station device 10 or user device 20 is configured.

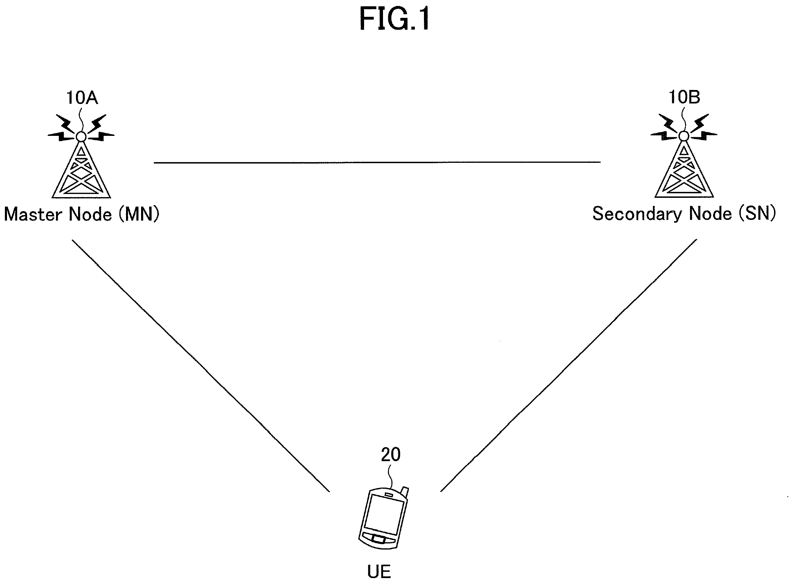

FIG. 1 is a diagram illustrating a radio communication system according to an embodiment of the present invention. FIG. 1 is a schematic diagram illustrating a radio communication system during E-UTRA-NR Dual Connectivity (EN-DC).

As illustrated in FIG. 1, the UE 20, which is user device, communicates with a base station device 10A provided by an LTE system and a base station device 10B provided by an NR system (which may be referred to as the "base station device 10" in the following, if the base station device 10A and the base station device 10B are not distinguished). The base station device 10A may be referred to as an enhanced NodeB (eNB), and the base station device 10B may be referred to as next generation NodeB (gNB). The user device 20 further supports LTE-NR dual connectivity, i.e., EN-DC, in which the base station device 10A is a master node (hereinafter referred to as "MN") and the base station device 10B is a secondary node (hereinafter referred to as "SN"). The user device 20 can execute simultaneous transmission or reception with the base station device 10A which is the master node and the base station device 10B which is the secondary node by simultaneously using a plurality of component carriers provided by the base station device 10A which is the master node and the base station device 10B which is the secondary node. Furthermore, one or more cells corresponding to one or more component carriers provided by the base station device 10A which is the master node are referred to as a Master Cell Group (MCG), and one or more cells corresponding to one or more component carriers provided by the base station device 10B which is the secondary node are referred to as a Secondary Cell Group (SCG). Note that, in the illustrated example, each of the LTE system and the NR system has only one base station. However, in general, a large number of base station devices 10 are located that cover service areas of the LTE system and the NR system.

The following embodiments are described with reference to LTE-NR dual connectivity. However, dual connectivity of the radio communication system according to embodiments of the present invention is not limited to the LTE-NR dual connectivity. Dual connectivity of the radio communication system according to embodiments of the present invention may be dual connectivity between multiple radio communication systems using different RATs, i.e., Multi-RAT dual connectivity (MR-DC). For example, dual connectivity of the radio communication system according to embodiments of the present invention may be NR-E-UTRA Dual Connectivity (NE-DC), may be dual connectivity in which the base station device 10A and the base station device 10B are in LTE systems, or may be dual connectivity in which the base station device 10A and the base station device 10B are in NR systems. Furthermore, for example, dual connectivity of the radio communication system according to embodiments of the present invention may be dual connectivity in which the base station device 10A and the base station device 10B are the same single base station device 10.

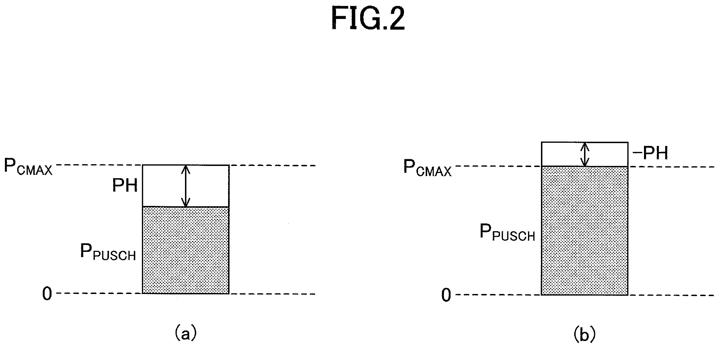

FIG. 2 is a diagram illustrating examples of power headroom (PH). PH refers to a difference between the maximum transmit power in a cell and the transmit power used at the time of PH reporting. In FIG. 2(a), the maximum transmit power is greater than the calculated transmit power, and thus the PH is a positive value. In FIG. 2(b), the calculated transmit power is greater than the maximum transmit power. In this case, the actual transmit power is the maximum transmit power, and thus the PH is a negative value.

In dual connectivity, the user device 20 is specified to report a Power Headroom report (PHR) to the configured serving cell, regardless of whether the serving cell is included in MCG or SCG. By using the PHR, the MN or SN in the dual connectivity observes a transmit power status of the other node, and executes power control or the like of the serving cell belonging to the node.

However, for a band combination that does not support dynamic power sharing (e.g., a combination of an MN band and an SN band), PH information is unable to be exchanged in real time between an NR functional unit and an LTE functional unit in the user device 20. Thus, in dual connectivity, omission of the PH reporting by a Media Access Control (MAC) entity of another node is being discussed. For example, in the EN-DC, when an NR MAC reports PHR to a gNB, reporting of PH in an LTE serving cell may be omitted. Since the omission of the PH report is not mandatory, omission of PH differs on a per user device 20 basis.

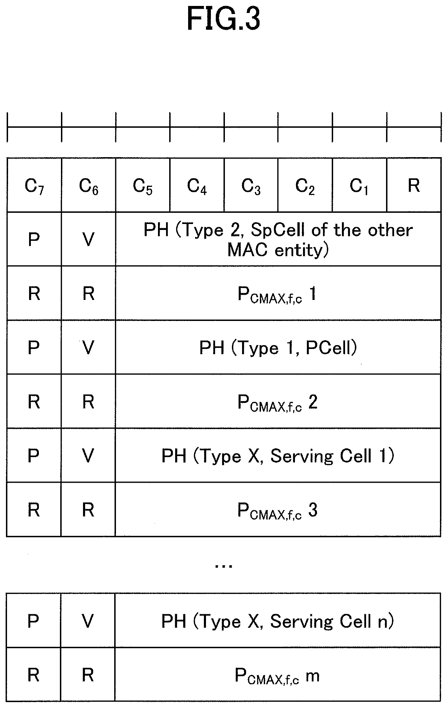

FIG. 3 is a diagram illustrating an example of an information element of a PHR. FIG. 3 is an example of a PHR MAC Control Element (CE) format. As illustrated in FIG. 3, the bitmap indicated by "Cᵢ" is set in the first octet. The "Cᵢ" indicates whether the user device 20 reports the PH of the corresponding serving cell. PH is not reported for a serving cell where Uplink (UL) transmission is not expected; for example, PH is not reported for Downlink (DL)-specified cells, deactivated secondary cells, or the like. Note that "P" illustrated in FIG. 3 indicates whether the MAC entity applies power backoff. "V" indicates whether the PH value is based on actual transmission or based on a reference format. The "R" indicates a reserved bit. "PH" indicates a PH level. "P_{CMAX, f}, _{c}" indicates nominal transmit power used to calculate PH. Note that Type 1, Type 2, and Type 3 are specified as PH types. Type 1 PH is the difference between the maximum nominal transmit power and the current transmit power. Type 2 PH is the difference between the maximum nominal transmit power and the current transmit power at Special cell (SpCell) of another node (e.g., an LTE MN when the own node is an SN of NR). Type 3 PH is the difference between the maximum nominal transmit power and the current transmit power for a Sounding Reference Signal (SRS) transmission.

Since, with "Cᵢ" corresponding to a secondary cell illustrated in FIG. 3, the serving cell for which PH is reported is indicated from among the secondary cells, even if the user device 20 omits reporting of the PH for a serving cell that is a secondary cell, the base station device 10 can determine the number of serving cells to which PH is reported by the PHR MAC CE.

However, "Cᵢ" is not defined for the primary cell. Accordingly, if the user device 20 omits reporting of PH to the primary cell, the base station device 10 is unable to determine the number of serving cells to which the PH is reported by the PHR MAC CE. Accordingly, the base station device 10 may be unable to acquire PHR correctly. In the related art technologies, the primary cell is constantly activated and UL transmission is mandatorily configured, so that PH reporting is always effective. However, depending on a band combination, PH reporting may be omitted. Thus, omission of PH reporting is also assumed for the primary cell.

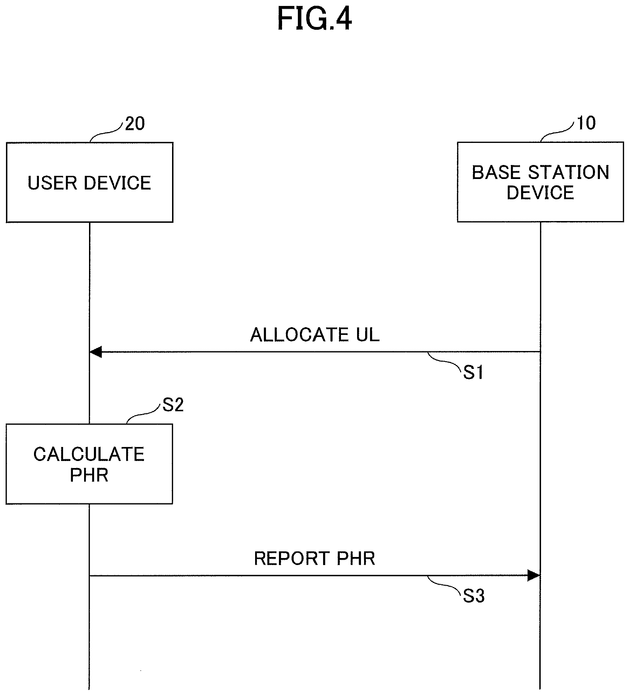

FIG. 4 is a sequence diagram for illustrating an example of PHR according to an embodiment of the present invention. In step S1, the base station device 10 transmits UL allocation to the user device 20. Subsequently, the user device 20 calculates a PHR for one or more serving cells (S2). Then, the user device 20 reports the calculated PHR to the base station device 10 (S3).

In PHR calculation in step S2 illustrated in FIG. 4, for a band combination for which the user device 20 does not support dynamic power sharing, the user device 20 may omit a PH field and an octet included in a P_{CMAX, f, C} field for a serving cell in the other MAC entity, except for the primary cell in the other MAC entity. The other MAC entity is, for example, a MAC entity for an LTE MN in a case where the own node is an NR SN. The user device 20 may report inaccurate values or specific values for the PH and P_{CMAX, f, C} for the primary cell in the other MAC entity. The PH and P_{CMAX, f, C} need not be accurate. The specific value may be a fixed value, such as a minimum index or maximum index, or may be a value indicating that the PH cannot be measured correctly. The above-described operation of "not omitting reporting of PH to the primary cell in the other MAC entity," the base station device 10 can determine the number of serving cells to which PH is reported by the PHR MAC CE, and thus the base station device 10 can acquire PHR correctly.

Furthermore, in PHR calculation in step S2 illustrated in FIG. 4, for a band combination for which the user device 20 does not support dynamic power sharing, the user device 20 may report an inaccurate value or a specific value as the PH information for a serving cell in another MAC entity. The PH information need not be accurate. The specific value may be a fixed value, such as a minimum index or maximum index, or may be a value that indicates that the PH cannot be measured correctly. By the above-described operation of "not omitting reporting of PH," the base station device 10 can determine the number of serving cells to which PH is reported by the PHR MAC CE, and the base station device 10 can acquire PHR correctly.

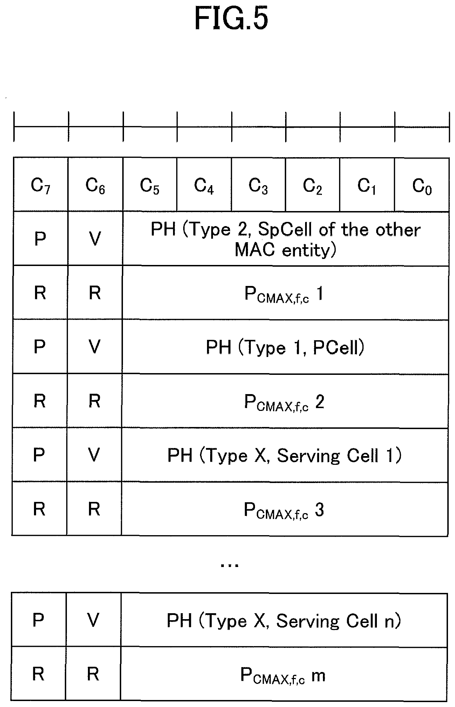

FIG. 5 is a diagram for illustrating an example (1) of PHR according to an embodiment of the present invention. In PHR calculation in step S2 illustrated in FIG. 4, the PHR MAC CE illustrated in FIG. 5 may be used. Unlike the PHR MAC CE illustrated in FIG. 3, by defining "Cᵢ" for the primary cell in another MAC entity, the user device 20 can transmit, to the base station device 10, a notification of whether the PH of the primary cell in the other MAC entity is to be reported. The base station device 10 can determine the number of serving cells to which PH is reported by the PHR MAC CE, and thus the base station device 10 can obtain PHR correctly.

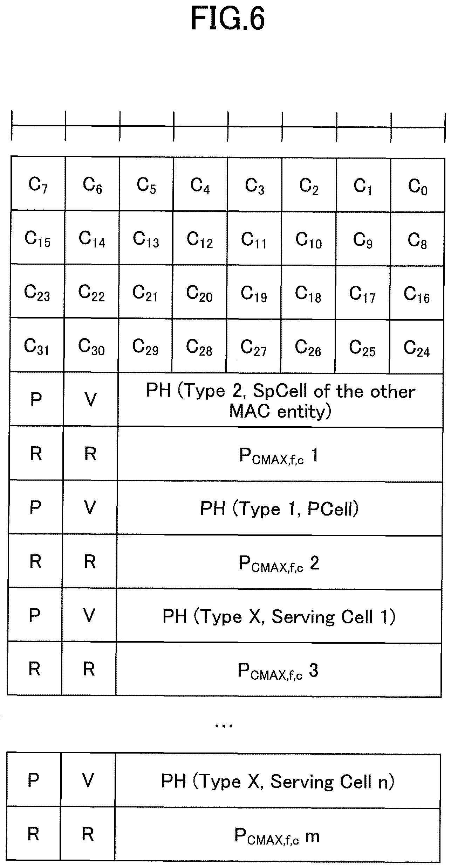

FIG. 6 is a diagram for illustrating an example (2) of PHR according to an embodiment of the present invention. FIG. 6 depicts PHR MAC CE in a case where the fields of the PH information exceeds 8. In PHR calculation in step S2 illustrated in FIG. 4, the PHR MAC CE illustrated in FIG. 6 may be used. Unlike the PHR MAC CE illustrated in FIG. 3, by defining, similar to FIG. 5, "Cᵢ" to the primary cell in another MAC entity, the user device 20 can transmit, to the base station device 10, a notification of whether the PH of the primary cell in the other MAC entity is to be reported. The base station device 10 can determine the number of serving cells to which PH is reported by the PHR MAC CE, and the base station device 10 can obtain PHR correctly.

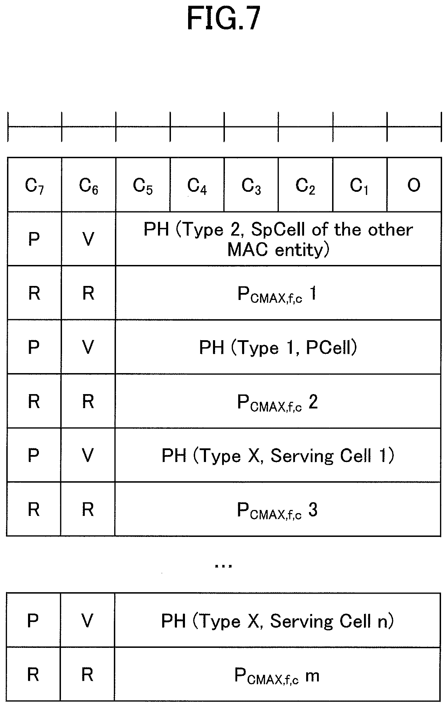

FIG. 7 is a diagram for illustrating an example (3) of PHR according to an embodiment of the present invention. In PHR calculation in step S2 illustrated in FIG. 4, the PHR MAC CE illustrated in FIG. 7 may be used. Unlike the PHR MAC CE illustrated in FIG. 3, the "O" field is defined for the primary cell in another MAC entity. The "O" field is a field indicating whether a PH field exists for the primary cell in another MAC entity. When the "O" is set to "0," the "O" field indicates that the PH field for the primary cell in another MAC entity is to be reported. When the "O" is set to "1," the "O" field indicates that the PH field for the primary cell in another MAC entity is not to be reported.

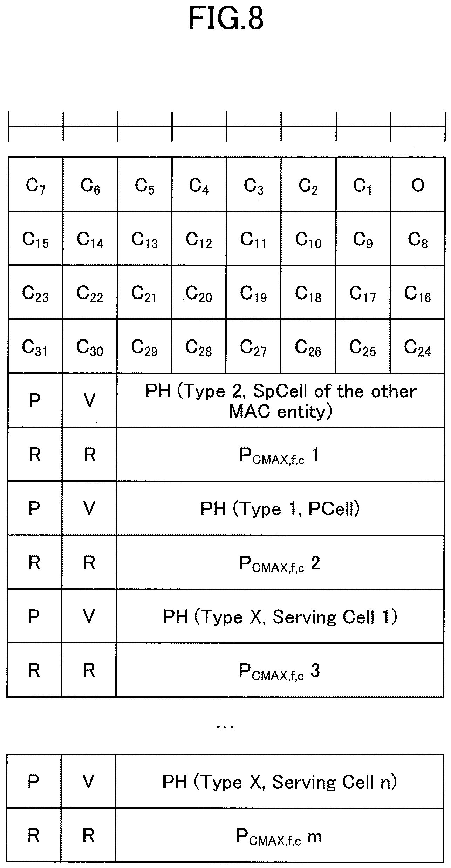

FIG. 8 is a diagram for illustrating an example (4) of PHR according to an embodiment of the present invention. FIG. 8 depicts PHR MAC CE in a case where the items of the PH information exceeds 8. In PHR calculation in step S2 illustrated in FIG. 4, the PHR MAC CE illustrated in FIG. 8 may be used. Unlike the PHR MAC CE illustrated in FIG. 3, the "O" field is defined for the primary cell in another MAC entity, as in FIG. 7. The "O" field is a field indicating whether a PH field exists for the primary cell in another MAC entity. When the "O" is set to "0," the "O" field indicates that the PH field for the primary cell in another MAC entity is to be reported. When the "O" is set to "1," the "O" field indicates that the PH field for the primary cell in another MAC entity is not to be reported.

Note that when the reporting of PH or P_{CMAX,f,c} (including the case of "P_{CMAX, c}, " in the following) is not omitted for a serving cell in another MAC entity, the value to be reported may be inaccurate. Accordingly, the method described in 1) to 3) below may be applied.

1) As the PH, virtual PH may be reported. The virtual PH is calculated using a reference format (fixed value) specified in a technical specification document, instead of the RB number and MCS used for an actual transmission. When a virtual PH is reported, the P_{CMAX, f, c} field is omitted, so that the size of the PHR MAC CE can be reduced, and an overhead can be reduced.

2) Depending on the user device 20 or the serving cell, the PH report value may be accurate. Accordingly, the user device 20 may transmit, to the base station device 10, a notification of whether the PH report value is accurate. For example, the notification may be transmitted by 1 bit, or the accuracy (or inaccuracy) of the value may be represented by a level. For example, Level 0, Level 1, Level 2, and Level 3 may be defined, so that accuracy increases in descending order of the levels. Level 3 may be defined as almost inaccurate, and Level 0 may be defined as accurate. The base station device 10 can perform transmission power control by determining the correct PH or P_{CMAX, f, c} according to the level on a per user device 20 basis.

3) A network restriction may be defined for a serving cell in another MAC entity such that a configuration is always deactivated as to whether the PH or P_{CMAX, f, c} is to be reported (e.g., phr-Type2OtherCell).

Note that the above-described embodiments may be applied to another case in which PHR cannot be reported, instead of the PHR in which the dynamic power sharing is not supported. For example, another case in which the PHR cannot be reported may be, for example, a case in which a value for PH reporting is unable to be calculated due to the difference in time units for transmission and reception (e.g., Transmission Time Interval (TTI), subframe, slot, or symbol length) in the serving cell or BWP, during DC or UL CA.

The above-described embodiments may also be applied to another reporting control for a serving cell in another MAC entity, which is performed from the user device 20 to the base station device 10. For example, the above-described embodiments may be applied to DL/UL quality measurements (a CSI report, a measurement report), a buffer status report (BSR), a recommended data rate, or the like.

According to the above-described embodiments, the user device 20 may explicitly or implicitly transmit, to the base station device 10, a notification of whether the PH information for the primary cell in another MAC entity is to be reported. Accordingly, the base station device 10 can determine the number of serving cells to which PH is reported by the PHR MAC CE, and thus the base station device 10 can obtain PHR correctly.

Namely, reporting of power headroom can be appropriately executed.

### (Device Configuration)

Next, a functional configuration example of the base station device 10 and the user device 20 that execute the process and operation described above is described. The base station device 10 and the user device 20 include the functions for implementing the above-described embodiments. However, each of the base station device 10 and the user device 20 may include only some of the functions in the embodiments.

### <Base station device 10>

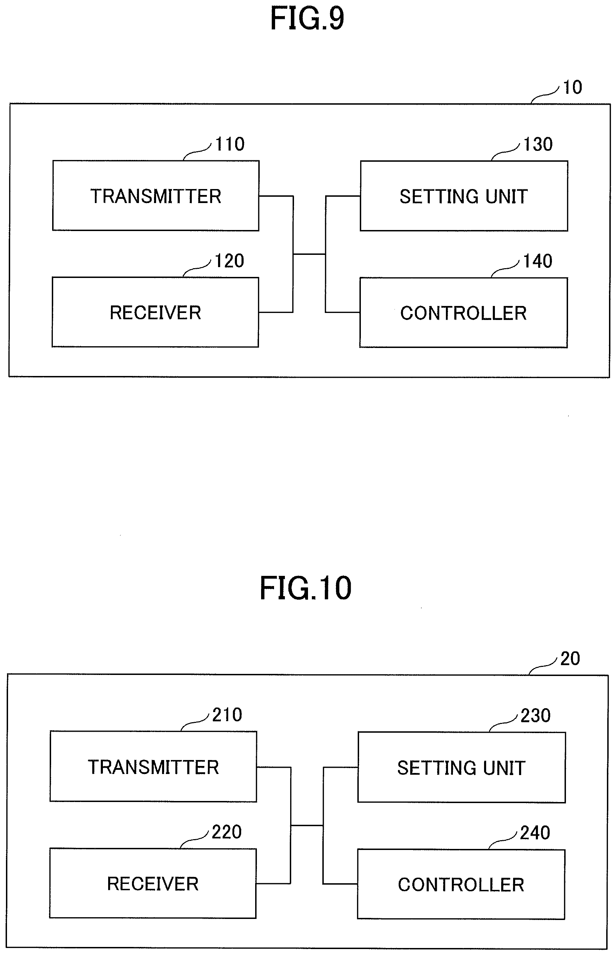

FIG. 9 is a diagram illustrating an example of a functional configuration of the base station device 10. As illustrated in FIG. 9, the base station device 10 includes a transmitter 110, a receiver 120, a setting unit 130, and a controller 140. The functional configuration illustrated in FIG. 9 is only one example. Functional division and names of the functional units may be any division and names, provided that the operation according to an embodiment of the present invention can be performed.

The transmitter 110 includes a function for generating a signal to be transmitted to the user device 20 and transmitting the signal through radio. The receiver 120 includes a function for receiving various signals transmitted from the user device 20 and retrieving, for example, higher layer information from the received signals. The transmitter 110 is provided with a function for transmitting NR-PSS, NR-SSS, NR-PBCH, DL/UL control signals, DL/UL data signal, or the like to the user device 20.

The setting unit 130 stores preconfigured configuration information and various types of configuration information transmitted to the user device 20 in a storage device, and reads out the information as necessary. The content of the configuration information is, for example, a configuration on the PHR, or the like.

As described in the embodiments, the controller 140 performs power control based on PHR received from the user device 20. A functional unit related to signal transmission in the controller 140 may be included in the transmitter 110, and a functional unit related to signal reception in the controller 140 may be included in the receiver 120.

### <User device 20>

FIG. 10 is a diagram illustrating an example of a functional configuration of the user device 20. As illustrated in FIG. 10, the user device 20 includes a transmitter 210, a receiver 220, a setting unit 230, and a controller 240. The functional configuration illustrated in FIG. 10 is only one example. Functional division and names of the functional units may be any division and names, provided that the operation according to the embodiments of the present invention can be performed.

The transmitter 210 creates a transmit signal from transmit data and transmits the transmit signal through radio. The receiver 220 receives various types of signals wirelessly and retrieves a higher layer signal from the received physical layer signal. The receiver 220 is provided with a function to receive NR-PSS, NR-SSS, NR-PBCH, DL/UL/SL control signals, or the like transmitted from the base station device 10. Furthermore, for example, the transmitter 210 transmits, to another user device 20, a Physical Sidelink Control Channel (PSCCH), a Physical Sidelink Shared Channel (PSSCH), a Physical Sidelink Discovery Channel (PSDCH), a Physical Sidelink Broadcast Channel (PSBCH), or the like, as the D2D communication, and the receiver 120 receives, from another user device 20, a PSCCH, PSSCH, PSDCH, PSBCH, or the like.

The setting unit 230 stores various types of setting information received from the base station device 10 or the user device 20 by the receiver 220 in the storage device and reads it from the storage device as necessary. The setting unit 230 also stores preconfigured configuration information. The content of the configuration information is, for example, a configuration on PHR, or the like.

The controller 240 calculates PHR to be transmitted to the base station device 10, as described in the embodiments. A functional unit related to signal transmission in the controller 240 may be included in the transmitter 210, and a functional unit related to signal reception in the controller 240 may be included in the receiver 220.

### (Hardware configuration)

The block diagrams (FIG. 9 and FIG. 10) used for describing the above-described embodiments show blocks of functional units. These functional blocks (components) are implemented by any combination of at least one of hardware and software. Additionally, means for implementing each functional block is not particularly limited. Namely, each functional block may be implemented by a single device that is physically or logically combined, or two or more devices that are physically or logically separated may be directly or indirectly connected (e.g., using wire, radio, etc.) and implemented using these multiple devices. The functional block may be implemented by combining software with the device or devices.

Functions include, but are not limited to, judgment, decision, determination, computation, calculation, processing, derivation, investigation, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the method of implementation is not particularly limited.

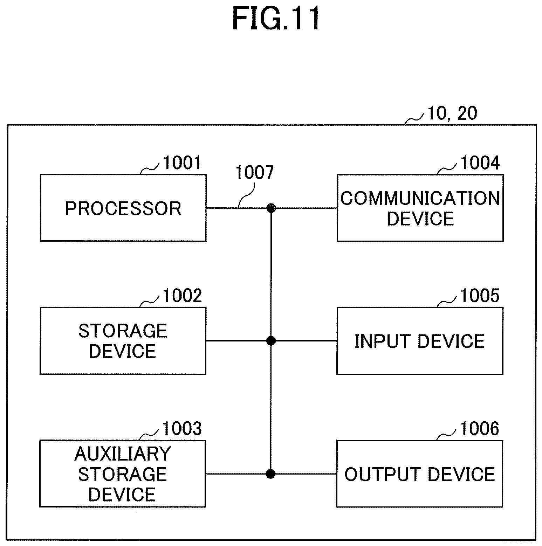

For example, the base station device 10, the user device 20, etc., according to the embodiments of the present disclosure may function as a computer for processing the radio communication method of the present disclosure. FIG. 11 is a diagram illustrating an example of a hardware configuration of the base station device 10 and the user device 20 according to an embodiment of the present disclosure. The base station device 10 and the user device 20 described above may be physically configured as a computer device including a processor 1001, a storage device 1002, an auxiliary storage device 1003, a communication device 1004, an input device 1005, an output device 1006, a bus 1007, etc.

In the following description, the term "apparatus" can be read as circuits, devices, units, etc. The hardware configuration of the base station device 10 and the user device 20 may be configured to include one or more of the devices shown in the figure or may be configured without some of the devices.

Each function in the base station device 10 and the user device 20 is implemented by causing the processor 1001 to perform an operation by reading predetermined software (a program) on hardware, such as the processor 1001 and the storage device 1002, and by controlling communication by the communication device 1004 and controlling at least one of reading and writing of data in the storage device 1002 and the auxiliary storage device 1003.

The processor 1001 operates, for example, an operating system to control the entire computer. The processor 1001 may be formed of a central processing unit (CPU) including an interface with peripheral devices, a controller, a processor, a register, and the like. For example, the above-described controller 140, controller 240, or the like may be implemented by the processor 1001.

The processor 1001 reads out a program (program code), software module, data, etc., from at least one of the auxiliary storage device 1003 and the communication device 1004 to the storage device 1002 and performs various types of processing in accordance with these. As a program, a program that causes a computer to execute at least a part of the operation described in the above-described embodiments is used. For example, the controller 140 of the base station device 10 illustrated in FIG. 9 may be stored in the storage device 1002 and implemented by a control program operated by the processor 1001. For example, the controller 240 of the user device 20 illustrated in FIG. 10 may be implemented by a control program stored in the storage device 1002 and operated by the processor 1001. The above-described various types of processes are described to be executed by the single processor 1001. However, the above-described various types of processes may be simultaneously or sequentially executed by two or more processors 1001. The processor 1001 may be implemented by one or more chips. The program may be transmitted from the network via a telecommunication line.

The storage device 1002 is a computer readable recording medium, and the storage device 1002 may be formed of at least one of a Read-Only Memory (ROM), an Erasable Programmable ROM (EPROM), an Electrically Erasable Programmable ROM (EEPROM), a random access memory (RAM), and the like, for example. The storage device 1002 may be referred to as a register, a cache, a main memory (main storage device), or the like. The storage device 1002 can store programs (program codes), software modules, or the like that can be executed to perform the process according to the embodiments of the present invention.

The auxiliary storage device 1003 is a computer readable recording medium, and, for example, the auxiliary storage device 1003 may be formed of at least one of an optical disk such as a CD-ROM (Compact Disc ROM), a hard disk drive, a flexible disk, a magneto-optical disk (for example, a compact disk, a digital versatile disk, a Blu-ray (registered trademark) disk), a smart card, a flash memory (for example, a card, a stick, a key drive), a floppy (registered trademark) disk, a magnetic strip, or the like. The above-described storage medium may be, for example, a database including at least one of the storage device 1002 and the auxiliary storage device 1003, a server, or any other suitable medium.

The communication device 1004 is hardware (transmission/reception device) for performing communication between computers via at least one of a wired and wireless network, and, for example, the communication device 1004 is also referred to as a network device, a network controller, a network card, a communication module, or the like. The communication device 1004 may include a high frequency switch, duplexer, filter, frequency synthesizer, or the like, for example, to implement at least one of a frequency division duplex (FDD) and a time division duplex (TDD). For example, a transmitting/receiving antenna, an amplifier unit, a transceiver unit, a transmission line interface, and the like may be implemented by the communication device 1004. The transceiver unit may be implemented to be physically or logically separated between a transmitting unit and a receiving unit.

The input device 1005 is an input device (e.g., a keyboard, a mouse, a microphone, a switch, a button, a sensor, etc.) for receiving an input from outside. The output device 1006 is an output device (e.g., display, speaker, LED lamp, etc.) that performs output toward outside. Note that the input device 1005 and the output device 1006 may be integrated (for example, a touch panel).

Furthermore, the devices, such as the processor 1001 and the storage device 1002, are connected by a bus 1007 for communicating information. The bus 1007 may be formed of a single bus, or the bus 1007 may be formed of buses that are different among the devices.

Furthermore, each of the base station device 10 and the user device 20 may be configured to include hardware, such as a microprocessor, a digital signal processor (DSP: Digital Signal Processor), an ASIC (Application Specific Integrated Circuit), a PLD (Programmable Logic Device), an FPGA (Field Programmable Gate Array), etc., and a part or all of the functional blocks may be implemented by the hardware. For example, the processor 1001 may be implemented by using at least one of these hardware components.

### (Conclusion of the embodiments)

As described above, according to the embodiments of the present invention, there is provided a user device including a controller that calculates a power headroom report in a case in which the power headroom report is omissible, wherein the power headroom report includes a power headroom for a serving cell of a first base station device and a power headroom for a serving cell of a second base station device; and a transmitter that transmits the power headroom report to the first base station device, wherein a number of serving cells to which power headrooms are reported is identifiable based on the power headroom report.

According to the above-described configuration, the user device 20 can implicitly or explicitly transmit, to the base station device 10, a notification of whether PH information for the primary cell in another MAC entity is to be reported. Accordingly, the base station device 10 can determine the number of the serving cells to which the PH is reported by using the PHR MAC CE, and thus the base station device 10 can correctly obtain the PHR. Namely, reporting of the power headroom can be appropriately executed.

The case in which the power headroom report is omissible may be a case in which a band combination of a band of the first base station device and a band of the second base station device does not support dynamic power sharing. According to this configuration, the user device 20 can correctly report the PHR in a band combination that does not support dynamic power sharing.

A power headroom of a serving cell other than a serving cell of a specific cell type of the second base station device may be omissible from the power headroom report by the controller, and the controller may include a power headroom of the serving cell of the specific cell type of the second base station device in the power headroom report. According to this configuration, the user device 20 can ensure that the PH information for the primary cell in another MAC entity is included in the PHR.

A specific fixed value may be set for a power headroom of a serving cell of a specific cell type of the second base station device. According to this configuration, the user device 20 can transmit, to the base station device 10, a notification that the PH cannot be correctly measured.

The controller may include, in the power headroom report, information indicating whether a power headroom of a serving cell of a specific cell type of the second base station device is included in the power headroom report. According to this configuration, the user device 20 can transmit, to the base station device 10, a notification of whether the PH information for the primary cell in another MAC entity is included in the PHR.

The controller may set a specific fixed value in a power headroom for all serving cells of the second base station device. According to this configuration, the user device 20 can transmit, to the base station device 10, a notification that the PH cannot be correctly measured.

Furthermore, according to the embodiments of the present invention, there is provided a base station device that is a second base station device for communicating with a user device together with a first base station device, the base station device including a receiver that receives, from the user device, a power headroom report including a power headroom for a serving cell of the first base station device and a power headroom for a serving cell of the second base station device, in a case in which the power headroom report is omissible; and a controller that identifies a number of serving cells to which power headrooms are reported, based on the power headroom report.

According to the above-described configuration, the user device 20 can implicitly or explicitly transmit, to the base station device 10, a notification of whether PH information for the primary cell in another MAC entity is to be reported. Accordingly, the base station device 10 can determine the number of the serving cells to which the PH is reported by using the PHR MAC CE, and thus the base station device 10 can correctly obtain the PHR. Namely, reporting of the power headroom can be appropriately executed.

### (Supplemental embodiments)

The embodiments of the present invention are described above. However, the disclosed invention is not limited to the above-described embodiments, and those skilled in the art would appreciate various modified examples, revised examples, alternative examples, substitution examples, and so forth. In order to facilitate understanding of the invention, specific numerical value examples are used for description. However, the numerical values are merely examples, and any suitable values may be used unless as otherwise specified. The classification of items in the above description is not essential to the present invention. Matter described in two or more items may be combined and used as necessary, and matter described in one item may be applied to matter described in another item (provided that they do not contradict). The boundary between functional units or processing units in a functional block diagram does not necessarily correspond to the boundary between physical components. Operations of a plurality of functional units may be performed physically by one component, or an operation of one functional unit may be physically performed by a plurality of parts. The order of the procedures described in the embodiments may be changed, provided that they do not contradict. For the sake of convenience of processing description, the base station device 10 and the user device 20 are described using the functional block diagrams. However, such devices may be implemented by hardware, software, or a combination thereof. Each of software executed by the processor included in the base station device 10 according to the embodiments of the present invention and software executed by the processor included in the user device 20 according to the embodiments of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Notification of information is not limited the aspects/embodiments described in the present specification and may be performed by other methods. For example, notification of information may be performed via physical layer signaling (for example, Downlink Control Information (DCI) or Uplink Control Information (UCI), higher-layer signaling (for example, Radio Resource Control (RRC) signaling, Medium Access Control (MAC) signaling, broadcast information (Master Information Block (MIB), or System Information Block (SIB), other signals, or by a combination thereof. Furthermore, RRC signaling may be referred to as an RRC message. For example, the RRC message may be an RRC connection setup (RRC Connection Setup) message, an RRC connection reconfiguration (RRC Connection Reconfiguration) message, etc.

Each aspect/embodiment described in present disclosure may be applied to at least one of Long Term Evolution (LTE), LTE-advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), any other systems using an appropriate system and next generation systems extended on the basis of these systems. Furthermore, a plurality of systems may be combined (e.g., a combination of at least one of LTE and LTE-A and 5G, etc.).

In processing procedures, sequences, flowcharts, etc., of each aspect/embodiment described in the specification, the order may be changed provided that there is no contradiction. For example, for the methods described in the specification, the elements of the various steps are presented in an exemplary order and are not limited to a specific order presented.

The specific operations that are described in the specification to be performed by the base station device 10 may be performed by their upper nodes in some cases. In a network formed of one or more network nodes including the base station device 10, it is apparent that the various operations performed for communication with the user device 20 may be performed by the base station device 10 and a network node other than the base station device 10 (e.g., MME or S-GW can be considered, however, not limited to these). In the above description, a case is exemplified in which there is one network node other than the base station device 10. However, it can be a combination of other network nodes (e.g., MME and S-GW).

The information or signals described in this disclosure can be output from a higher layer (or lower layer) to a lower layer (or higher layer). It may be input and output through multiple network nodes.

Input and output information, etc., may be stored in a specific location (e.g., memory) or managed using management tables. Input and output information, etc., may be overwritten, updated, or added. Output information, etc., may be deleted. The input information, etc., may be transmitted to another device.

The determination in this disclosure may be made by a value (0 or 1) represented by 1 bit, by a true or false value (Boolean: true or false), or by a numerical comparison (e.g., a comparison with a predetermined value).

Software should be broadly interpreted to mean, regardless of whether it is referred to as software, firmware, middleware, microcode, hardware description language, or any other name, instructions, sets of instructions, code, code segments, program code, programs, subprograms, software modules, applications, software applications, software packages, routines, subroutines, objects, executable files, executable threads, procedures, functions, etc.

Software, instructions, information, and the like may also be transmitted and received via a transmission medium. For example, when software is transmitted from a website, server, or other remote source using at least one of wireline technology (such as coaxial cable, fiber optic cable, twisted pair, digital subscriber line (DSL: Digital Subscriber Line)) and radio technology (infrared, microwave, etc.), at least one of these wireline technology and wireless technology is included within the definition of a transmission medium.

The information, signals and the like described in this disclosure may be represented using any of a variety of different techniques. For example, data, instructions, commands, information, signals, bits, symbols, chips, etc., which may be referred to throughout the above description may be represented by voltages, currents, electromagnetic waves, magnetic fields or magnetic particles, optical fields or photons, or any combination thereof.

The terms described in this disclosure and those necessary for understanding this disclosure may be replaced with terms having the same or similar meanings. For example, at least one of the channels and the symbols may be a signal (signaling). The signal may also be a message. A component carrier (CC: Component Carrier) may also be referred to as a carrier frequency, cell, frequency carrier, or the like.

As used in this disclosure, the terms "system" and "network" are used interchangeably.

The information, parameters, and the like described in the present disclosure may also be expressed using absolute values, relative values from predetermined values, or they may be expressed using corresponding separate information. For example, a radio resource may be indicated by an index.

The name used for the parameters described above is not restrictive in any respect. In addition, the mathematical equations using these parameters may differ from those explicitly disclosed in this disclosure. Since the various channels (e.g., PUCCH, PDCCH, etc.) and information elements can be identified by any suitable name, the various names assigned to these various channels and information elements are not in any way limiting.

In this disclosure, the terms "Base Station (BS: Base Station)," "Radio Base Station," "Base Station Apparatus," "Fixed Station," "NodeB," "eNodeB (eNB)," "gNodeB (gNB)," "Access Point," "Transmission Point," "Reception Point," "Transmission/Reception Point," "Cell," "Sector," "Cell Group," "Carrier," "Component Carrier" and the like may be used interchangeably, and may be referred to in terms, such as a macro cell, a small cell, a femtocell, a pico-cell and the like.

A base station can accommodate one or more (e.g., three) cells. When a base station accommodates a plurality of cells, the entire coverage area of the base station can be divided into a plurality of smaller areas, each smaller area can also provide communication services by means of a base station subsystem (e.g., an indoor small base station (RRH: Remote Radio Head). The term "cell" or "sector" refers to a portion or all of the coverage area of at least one of the base station and base station subsystem that provides communication services at the coverage.

In this disclosure, terms such as "MS: Mobile Station," "user terminal," "UE: User Equipment," "terminal," and the like may be used interchangeably.

The mobile station may be referred to by one of ordinary skill in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base stations and the mobile station may be referred to as a transmitter, receiver, communication device, or the like. At least one of the base station and the mobile station may be a device installed in a mobile body, a mobile body itself, or the like. The mobile body may be a vehicle (e.g., a car, an airplane, etc.), an unmanned mobile (e.g., a drone, an automated vehicle, etc.), or a robot (manned or unmanned). At least one of the base station and the mobile station includes a device that does not necessarily move during communication operations. For example, at least one of the base station and the mobile station may be an IoT (Internet of Things) device, such as a sensor.

In addition, the base station in the present disclosure may be replaced with the user terminal. For example, each aspect/embodiment of the present disclosure may be applied to a configuration in which communication between base stations and user terminals is replaced with communication between multiple units of user device 20 (e.g., may be referred to as D2D (Device-to-Device), V2X (Vehicle-to-Everything), etc.). In this case, the function of the base station device 10 described above may be provided by the user device 20. The phrases "uplink" and "downlink" may also be replaced with the phrases corresponding to the inter-terminal communication (e.g., "side"). For example, an uplink channel, a downlink channel, or the like may be replaced with a side channel.

Similarly, the user terminal in the present disclosure may be replaced with the base station. In this case, the base station may have the functions provided by the user terminal described above.

As used in this disclosure, the terms "determining" and "deciding" may encompass a wide variety of operations. For example, "determining" and "deciding" may include deeming that a result of judging, calculating, computing, processing, deriving, investigating, looking up, searching, inquiring (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided. Furthermore, "determining (deciding)" may be read as "assuming," "expecting," "considering," etc.

The terms "connected," "coupled," or any variation thereof mean any direct or indirect connection or coupling between two or more elements, and may include the presence of one or more intermediate elements between the two elements "connected" or "coupled" to each other. The coupling or connection between the elements may be physical, logical or a combination thereof. For example, "connection" may be read as "access." Two elements, when used in this specification, can be considered to be mutually "connected" or "coupled by using one or more wires, cables and/or printed electrical connections, and, as some non-limiting and non-comprehensive examples, by using electromagnetic energy such as electromagnetic energy with a wavelength in a radio frequency range, a microwave range, and an optical range (both visible and invisible).

The reference signal may be abbreviated as RS (Reference Signal), and may be referred to as a pilot (Pilot) according to applicable standards.

The expression "on the basis of" used in the present disclosure does not mean "on the basis of only" unless otherwise stated particularly. In other words, the expression "on the basis of" means both "on the basis of only" and "on the basis of at least."

Any reference to elements using names, such as "first" and "second," as used in this disclosure does not generally limit the amount or order of those elements. These names can be used in this specification as a convenient way to distinguish between two or more elements. Accordingly, the reference to the first and second elements does not imply that only two elements can be adopted, or that the first element must precede the second element in some way.

The "means" in the configuration of each of the above-described devices may be replaced with "part," "circuit," "device," etc.

As long as "include," "including," and variations thereof are used in this disclosure, the terms are intended to be inclusive in a manner similar to the term "comprising." Furthermore, the term "or" used in the disclosure is intended not to be an exclusive OR.

A radio frame may be formed of one or more frames in the time domain. In the time domain, each of the one or more frames may be referred to as a subframe. A subframe may further be formed of one or more slots in the time domain. A subframe may be a fixed time length (e.g., 1 ms) that does not depend on numerology.

The numerology may be a communication parameter to be applied to at least one of transmission or reception of a signal or a channel. The numerology may represent, for example, at least one of a subcarrier spacing (SCS: SubCarrier Spacing), a bandwidth, a symbol length, a cyclic prefix length, a transmission time interval (TTI: Transmission Time Interval), a symbol number per TTI, a radio frame configuration, a specific filtering process performed by a transceiver in a frequency domain, a specific windowing process performed by a transceiver in a time domain, etc.

A slot may be formed of, in a time domain, one or more symbols (OFDM (Orthogonal Frequency Division Multiplexing) symbols, SC-FDMA (Single Carrier Frequency Division Multiple Access) symbols, etc.). A slot may be a unit of time based on the numerology.

A slot may include a plurality of mini-slots. In a time domain, each mini-slot may be formed of one or more symbols. A mini-slot may also be referred to as a sub-slot. A mini-slot may be formed of fewer symbols than those of a slot. The PDSCH (or PUSCH) transmitted in a unit of time that is greater than a mini-slot may be referred to as PDSCH (or PUSCH) mapping type A. The PDSCH (or PUSCH) transmitted using a mini-slot may be referred to as PDSCH (or PUSCH) mapping type B.

Each of the radio frame, subframe, slot, mini-slot, and symbol represents a time unit for transmitting a signal. The radio frame, subframe, slot, mini-slot, and symbol may be called by respective different names.

For example, one subframe may be referred to as a transmission time interval (TTI: Transmission Time Interval), a plurality of consecutive subframes may be referred to as TTI, or one slot or one mini-slot may be referred to as TTI. Namely, at least one of a subframe and TTI may be a subframe (1 ms) in the existing LTE, may be a time interval shorter than 1 ms (e.g., 1 to 13 symbols), or a time interval longer than 1 ms. Note that the unit representing the TTI may be referred to as a slot, a mini-slot, etc., instead of a subframe.

Here, the TTI refers to, for example, the minimum time unit of scheduling in radio communication. For example, in the LTE system, the base station performs scheduling for allocating radio resources (such as a frequency bandwidth, transmission power, etc., that can be used in each unit of user device 20) in units of TTIs to each unit of user device 20. Note that the definition of the TTI is not limited to this.

The TTI may be a transmission time unit, such as a channel coded data packet (transport block), a code block, a codeword, etc., or may be a processing unit for scheduling, link adaptation, etc. Note that, when a TTI is provided, a time interval (e.g., a symbol number) onto which a transport block, a code block, or a code ward is actually mapped may be shorter than the TTI.

Note that, when one slot or one mini-slot is referred to as a TTI, one or more TTIs (i.e., one or more slots or one or more mini-slots) may be the minimum time unit of scheduling. Additionally, the number of slots (the number of mini-slots) forming the minimum time unit of scheduling may be controlled.

A TTI with a time length of 1 ms may be referred to as an ordinary TTI (TTI in LTE Rel. 8-12), a normal TTI, a long TTI, an ordinary subframe, a normal subframe, a long subframe, a slot, etc. A TTI that is shorter than a normal TTI may be referred to as a shortened TTI, a short TTI, a partial TTI (partial TTI or fractional TTI), a shortened subframe, a short subframe, a mini-slot, a sub-slot, a slot, etc.

Note that a long TTI (e.g., a normal TTI, a subframe, etc.) may be replaced with a TTI with a time length exceeding 1 ms, and a short TTI (e.g., a shortened TTI, etc.) may be replaced with a TTI with a TTI length that is shorter than the TTI length of the long TTI and longer than or equal to 1 ms.

A resource block (RB) is a resource allocation unit in the time domain and the frequency domain, and may include one or more consecutive subcarriers in the frequency domain. A number of subcarriers included in a RB may be the same irrespective of numerology, and may be 12, for example. The number of subcarriers included in a RB may be determined based on numerology.

Additionally, the resource block may include one or more symbols in the time domain, and may have a length of one slot, one mini-slot, one subframe, or one TTI. Each of one TTI and one subframe may be formed of one or more resource blocks.

Note that one or more RBs may be referred to as a physical resource block (PRB: Physical RB), a subcarrier group (SCG: Sub-Carrier Group), a resource element group (REG: Resource Element Group), a PRB pair, a RB pair, etc.

Additionally, a resource block may be formed of one or more resource elements (RE: Resource Element). For example, 1 RE may be a radio resource area of 1 subcarrier and 1 symbol.

A bandwidth part (BWP: Bandwidth Part) (which may also be referred to as a partial bandwidth, etc.) may represent, in a certain carrier, a subset of consecutive common RB (common resource blocks) for a certain numerology. Here, the common RB may be specified by an index of a RB when a common reference point of the carrier is used as a reference. A PRB may be defined in a BWP, and may be numbered in the BWP.

The BWP may include a BWP for UL (UL BWP) and a BWP for DL (DL BWP). For a UE, one or more BWPs may be configured within one carrier.

At least one of the configured BWPs may be active, and the UE is may not assume that a predetermined signal/channel is communicated outside the active BWP. Note that "cell," "carrier," etc. in the present disclosure may be replaced with "BWP."

The structures of the above-described radio frame, subframe, slot, mini-slot, symbol, etc., are merely illustrative. For example, the following configurations can be variously changed: the number of subframes included in the radio frame; the number of slots per subframe or radio frame; the number of mini-slots included in the slot; the number of symbols and RBs included in the slot or mini-slot; the number of subcarriers included in the RB; and the number of symbols, the symbol length, the cyclic prefix (CP: Cyclic Prefix) length, etc., within the TTI.

In the present disclosure, for example, if an article is added by translation, such as a, an, and the in English, the present disclosure may include that the noun following the article is plural.

In the present disclosure, the term "A and B are different" may imply that "A and B are different from each other." Note that the term may also imply "each of A and B is different from C." The terms, such as "separated," "coupled," etc., may also be interpreted similarly.

The aspects/embodiments described in this disclosure may be used alone, in combination, or switched with implementation. Notification of predetermined information (e.g. "X" notice) is not limited to a method that is explicitly performed, and may also be made implicitly (e.g. "no notice of the predetermined information").

In the present disclosure, the gNB or the SN is an example of a first base station. The gNB or the MN is an example of a second base station. The primary cell is an example of a specific cell type.

While the present disclosure is described in detail above, those skilled in the art will appreciate that the present disclosure is not limited to the embodiments described in the present disclosure. The disclosure may be implemented as modifications and variations without departing from the scope of the disclosure as defined by the claims. Accordingly, the description of the present disclosure is for illustrative purposes only and is not intended to have any restrictive meaning with respect to the present disclosure.

### LIST OF REFERENCE SYMBOLS

- 10: base station device
- 110: transmitter
- 120: receiver
- 130: setting unit
- 140: controller
- 20: user device
- 210: transmitter
- 220: receiver
- 230: setting unit
- 240: controller
- 1001: processor
- 1002: storage device
- 1003: auxiliary storage device
- 1004: communication device
- 1005: input device
- 1006: output device

## Claims

1. A user device (20) comprising:
a controller (240) adapted to calculate a power headroom for a band combination for which dynamic power sharing is not supported, the band combination including a band of a first base station device and a band of a second base station device; and
a transmitter (210) adapted to transmit, to the first base station device, a power headroom report including the power headroom calculated for the band combination by omitting a power headroom for a serving cell of the second base station device other than a primary cell.

2. The user device (20) according to claim 1, wherein a specific fixed value is set for a power headroom of the primary cell of the second base station device.

3. The user device (20) according to claim 1, wherein the controller (240) includes, in the power headroom report, information indicating whether a power headroom of the primary cell of the second base station device is included in the power headroom report.

4. A first base station device (10) for communicating with a user device (20) together with a second base station device, the first base station device comprising:
a receiver (120) adapted to receive, from the user device (20), a power headroom report including a power headroom for a band combination for which dynamic power sharing is not supported, the band combination including a band of the first base station device and a band of the second base station device, the power headroom report including the power headroom calculated for the band combination by omitting a power headroom for a serving cell of the second base station device other than a primary cell; and
a controller (140) adapted to perform power control based on the received power headroom report.

## Patentansprüche

1. Benutzervorrichtung (20), umfassend:
eine Steuereinheit (240), die so angepasst ist, dass sie eine Leistungsreserve für eine Bandkombination berechnet, für die eine dynamische Leistungsaufteilung nicht unterstützt wird, wobei die Bandkombination ein Band einer ersten Basisstationsvorrichtung und ein Band einer zweiten Basisstationsvorrichtung einschließt; und
einen Sender (210), der so angepasst ist, dass er an die erste Basisstationsvorrichtung einen Leistungsreservenbericht sendet einschließlich der für die Bandkombination berechneten Leistungsreserve durch Weglassen einer Leistungsreserve für eine bedienende Zelle der zweiten Basisstationsvorrichtung, die nicht eine primäre Zelle ist.

2. Benutzervorrichtung (20) nach Anspruch 1, wobei ein spezifischer fester Wert für eine Leistungsreserve der primären Zelle der zweiten Basisstationsvorrichtung eingestellt ist.

3. Benutzervorrichtung (20) nach Anspruch 1, wobei die Steuereinheit (240) in dem Leistungsreservenbericht Informationen einschließt, die angeben, ob eine Leistungsreserve der primären Zelle der zweiten Basisstationsvorrichtung in dem Leistungsreservenbericht eingeschlossen ist.

4. Erste Basisstationsvorrichtung (10) zum Kommunizieren mit einer Benutzervorrichtung (20) zusammen mit einer zweiten Basisstationsvorrichtung, wobei die erste Basisstationsvorrichtung umfasst:
einen Empfänger (120), der so angepasst ist, dass er von der Benutzervorrichtung (20) einen Leistungsreservenbericht empfängt einschließlich einer Leistungsreserve für eine Bandkombination, für die eine dynamische Leistungsaufteilung nicht unterstützt wird, wobei die Bandkombination ein Band der ersten Basisstationsvorrichtung und ein Band der zweiten Basisstationsvorrichtung einschließt, wobei der Leistungsreservenbericht die Leistungsreserve einschließt, die für die Bandkombination durch Weglassen einer Leistungsreserve für eine bedienende Zelle der zweiten Basisstationsvorrichtung, die keine primäre Zelle ist, berechnet wird; und
eine Steuereinheit (140), die so angepasst ist, dass sie eine Leistungssteuerung auf der Grundlage des empfangenen Leistungsreservenberichts durchführt.

## Revendications

1. Dispositif d'utilisateur (20), comprenant :
un dispositif de commande (240) apte à calculer une marge de puissance pour une combinaison de bandes pour laquelle un partage de puissance dynamique n'est pas supporté, la combinaison de bandes incluant une bande d'un premier dispositif de station de base et une bande d'un deuxième dispositif de station de base ; et
un émetteur (210) apte à transmettre, au premier dispositif de station de base, un rapport de marge de puissance incluant la marge de puissance calculée pour la combinaison de bandes en omettant une marge de puissance pour une cellule de desserte du deuxième dispositif de station de base autre qu'une cellule primaire.

2. Dispositif d'utilisateur (20) selon la revendication 1, dans lequel une valeur fixe spécifique est définie pour une marge de puissance de la cellule primaire du deuxième dispositif de station de base.

3. Dispositif d'utilisateur (20) selon la revendication 1, dans lequel le dispositif de commande (240) inclut, dans le rapport de marge de puissance, des informations indiquant si une marge de puissance de la cellule primaire du deuxième dispositif de station de base est comprise dans le rapport de marge de puissance.

4. Premier dispositif de station de base (10) pour communiquer avec un dispositif d'utilisateur (20) de concert avec un deuxième dispositif de station de base, le premier dispositif de station de base comprenant :
un récepteur (120) apte à recevoir, en provenance du dispositif d'utilisateur (20), un rapport de marge de puissance incluant une marge de puissance pour une combinaison de bandes pour laquelle un partage de puissance dynamique n'est pas supporté, la combinaison de bandes incluant une bande du premier dispositif de station de base et une bande du deuxième dispositif de station de base, le rapport de marge de puissance incluant la marge de puissance calculée pour la combinaison de bandes en omettant une marge de puissance pour une cellule de desserte du deuxième dispositif de station de base autre qu'une cellule primaire ; et
un dispositif de commande (140) apte à exécuter une commande de puissance sur la base du rapport de marge de puissance reçu.
